(19) **Europäisches Patentamt / European Patent Office / Office européen des brevets**

(11) **EP 4 589 994 A1**

(12) **EUROPEAN PATENT APPLICATION**

(43) Date of publication:
**23.07.2025 Bulletin 2025/30**

(21) Application number: **25150694.5**

(22) Date of filing: **08.01.2025**

(51) International Patent Classification (IPC):
**H04S 7/00** *(2006.01)* **H04S 3/02** *(2006.01)*

(52) Cooperative Patent Classification (CPC):
**H04S 7/301;** H04S 3/02; H04S 7/303;
H04S 2400/13

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.01.2024 US 202418417710**

(71) Applicant: **Harman International Industries, Inc.**
**Stamford, Connecticut 06901 (US)**

(72) Inventors:
• **FERNANDEZ FRANCO, Alfredo**
**Stamford, CT, 06901 (US)**
• **MATUSHKIN, Anton**
**Stamford, Ct, 06901 (US)**

(74) Representative: **Westphal, Mussgnug & Partner,**
**Patentanwälte mbB**
**Werinherstraße 79**
**81541 München (DE)**

(54) **REMIXING MULTICHANNEL AUDIO BASED ON SPEAKER POSITION**

(57) In various embodiments, a computer-implemented method comprises determining a loudspeaker position of a loudspeaker in a listening environment, determining a target speaker position within the listening environment, retrieving an audio signal, computing a distance between the loudspeaker position and the target speaker position, generating a modified audio signal, where an amplitude of the modified audio signal is based on (i) the audio signal, (ii) the distance, and (iii) a distance attenuation function, and transmitting the modified audio signal to the loudspeaker.

FIG. 5

**Description**

**BACKGROUND**

**Field of the Various Embodiments**

The various embodiments relate generally to audio output devices and, more specifically, to remixing multichannel audio based on speaker position.

**Description of the Related Art**

It is often desirable to output audio through a sound system, such as groups of loudspeakers. The loudspeakers are often positioned at certain locations within a physical space. For example, a given room includes a group of loudspeakers that are organized as a home theater, where a center loudspeaker is positioned near the center of a front wall of the room, and front left, front right, rear left, and/or rear right loudspeakers are each positioned at edges of the room. The audio playback device transmits a signal to each loudspeaker so that a listener within the physical space hears the combined output of all of the loudspeakers.

During operation of the sound system, the loudspeakers positioned in the listening environment generate a sound field. For example, each loudspeaker in a multichannel audio system receives a separate audio channel and reproduces the audio channel. The audio reproductions of the respective audio channels combine to form a sound field. The sound field of the sound system is highly dependent on the positioning and orientation of the loudspeakers and the audio channels output by each of the loudspeakers. Each audio channel provides directional and spatial cues to the listener based on the relative location of the listener to the loudspeaker(s) reproducing the respective audio channel. A typical sound field includes one or more "sweet spots." A sweet spot generally corresponds to a target location for a listener to be positioned in the listening environment. In the sound field, the sweet spots are generally tuned to yield desirable sound quality and provide the most accurate directional and spatial cues. Therefore, a listener positioned within a sweet spot hears the best sound quality that the sound system in the listening environment can offer.

At least one drawback of conventional sound systems is that such systems are complex and difficult to adjust to changes in the listening environment. In particular, many conventional sound systems distribute a set of audio channels that are based on idealized positions of loudspeakers within the listening environment to generate a sound field with a sweet spot at the target location. Such conventional sound systems distribute audio channels based on a predefined layout of audio channels corresponding to the idealized positions of the loudspeakers. For example, a multichannel audio system distributes audio channels for a 7-channel setup based on seven loudspeakers being evenly positioned within the listening environment around a target listening area, where each of the seven loudspeakers are. However, the positions of the loudspeakers within the listening environment may not match the positions of the loudspeakers in an idealized configuration. As a result, the loudspeakers generate a sound field with a sweet spot differing from the sweet spot for the idealized configuration, degrading the listening experience of the listener.

Further, users have difficulty reconfiguring conventional sound systems to generate audio channels that accurately reflect the positions of the loudspeakers that are present within the listening environment. As a result, users must learn highly complex audio characteristics of the loudspeakers in order to manually produce a new channel layout that corresponds to the arrangement of loudspeakers. Consequently, users avoid using multichannel audio due to unpredictable degradation associated with non-idealized arrangements of loudspeakers within a listening environment.

As the foregoing illustrates, what is needed in the art are more effective techniques for providing balanced audio to varying arrangements of loudspeakers.

**SUMMARY**

In various embodiments, a computer-implemented method comprises determining a loudspeaker position of a loudspeaker in a listening environment, determining a target speaker position within the listening environment, retrieving an audio signal, computing a distance between the loudspeaker position and the target speaker position, generating a modified audio signal, where an amplitude of the modified audio signal is based on (i) the audio signal, (ii) the distance, and (iii) a distance attenuation function, and transmitting the modified audio signal to the loudspeaker.

Further embodiments provide, among other things, non-transitory computer-readable storage media storing instructions for implementing the method set forth above, as well as a system configured to implement the method set forth above.

At least one technical advantage of the disclosed techniques relative to the prior art is that, with the disclosed techniques, sound systems can distribute audio channels to one or more loudspeakers in a physical listening area in a manner that uses the actual location of the loudspeakers to accurately reproduce the audio channel. In particular, by determining the position of one or more loudspeakers within the listening environment and attenuating audio channels based on distances between the position of an ideal loudspeaker and the positions of the one or more loudspeakers, the sound system provides a multichannel audio to a listening area. Further, mapping the audio channels to the respective loudspeakers enables a sound system to effectively incorporate varying quantities of loudspeakers in varying locations without requiring large and expensive processing resources to perform complex reconfiguration of the multichannel audio system. These technical advantages provide one or more technological improvements over prior art approaches.

## BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.

Figure 1 is a schematic diagram illustrating an audio processing system in accordance with various embodiments,

Figure 2 illustrates an example physical listening environment that includes a group of physical loudspeakers and a group of virtual audio emitters;

Figure 3 illustrates an example physical listening environment and corresponding virtual listening environment modeled by the audio processing system of Figure 1, according to various embodiments;

Figure 4 illustrates an example set of virtual audio listeners and a set of virtual audio emitters computed by the audio processing system of Figure 1; and

Figure 5 sets forth a flow chart of method steps for generating audio signals based on the positions of the loudspeakers, according to various embodiments.

## DETAILED DESCRIPTION

In the following description, numerous specific details are set forth to provide a more thorough understanding of the various embodiments. However, it will be apparent to one skilled in the art that the inventive concepts may be practiced without one or more of these specific details.

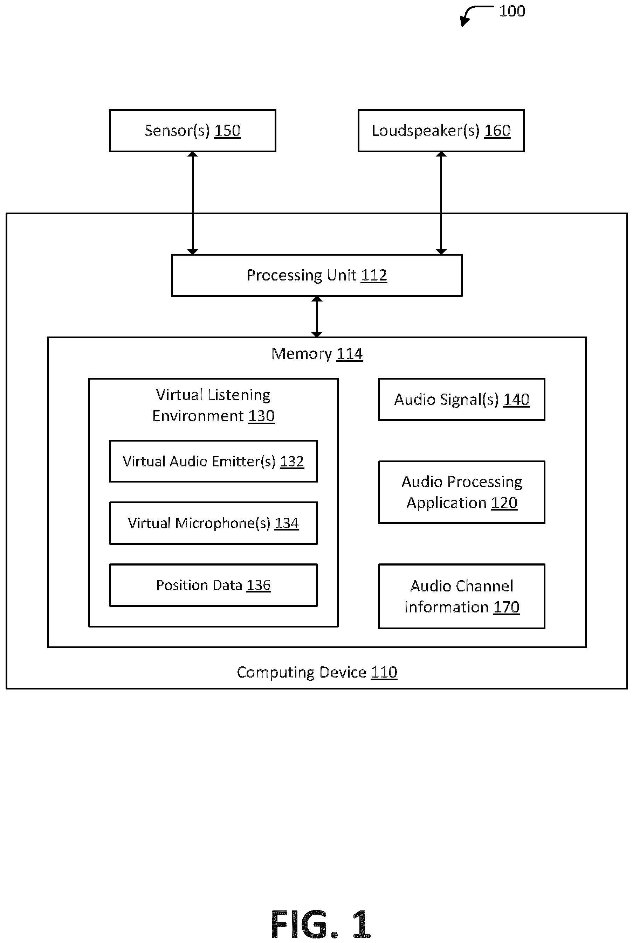

Figure 1 is a schematic diagram illustrating an audio processing system 100 in accordance with various embodiments. As shown, the audio processing system 100 includes, without limitation, a computing device 110, one or more sensors 150, and one or more loudspeakers 160. The computing device 110 includes, without limitation, a processing unit 112 and a memory 114. The memory 114 includes, without limitation, an audio processing application 120, a virtual listening environment 130, one or more audio signals 140, and audio channel information 170. The virtual listening environment 130 includes, without limitation, one or more virtual audio emitters 132, one or more virtual microphones 134, and position data 136.

The audio processing system 100 can be implemented in various forms, such as an interactive device including a processor and local memory, personal computers, and so forth. For example, the audio processing system 100 can be incorporated into various types of consumer devices (e.g. home theater, gaming system, etc.). The audio processing system 100 can perform the processing functions using a dedicated processing device and/or a separate computing device, such as a mobile computing device of a user or a cloud computing system. The audio processing system 100 can detect various environmental values using any number of sensors of various types, which can be attached to, integrated with other system components, or disposed separately.

The computing device 110 is a device that generates audio signals to drive one or more loudspeakers 160 to generate, in part, a sound field. In various embodiments, the computing device 110 receives one or more audio signals and generates a set of modified audio signals. The computing device 110 transmits the set of modified audio signals to the set of loudspeakers 160 for reproduction. In various embodiments, the computing device 110 can be a central unit (e.g., an audio receiver) in a home theater system, a soundbar, and/or another device that communicates with the one or more loudspeakers 160. In various embodiments, the computing device 110 is included in one or more devices, such as consumer products (e.g., gaming devices, gambling products, interactive toys, portable speakers, etc.), smart home devices (e.g., smart lighting systems, security systems, digital assistants, etc.), communications systems (e.g., conference call systems, video conferencing systems, speaker amplification systems, etc.), and so forth. In various embodiments, the computing device 110 is located in various environments including, without limitation, indoor environments (e.g., living room, conference room, conference hall, home office, etc.), and/or outdoor environments, (e.g., patio, rooftop, garden, etc.). In some embodiments, the computing device 110 is a low-power, limited processing, and/or limited memory device that implements a lightweight processing of incoming data. For example, the computing device 110 could be a Raspberry Pi (e.g., Pi 1®, Pi 2 ®, Pi 3 ®, or Pi 4 ®) that includes a processor, such as a digital signal processor, memory (e.g., 1-4 MB RAM), and storage (e.g., a flash storage card). In another example, the computing device 110 can be a development board, such as a Teensey® 4.0 microcontroller development board, or any other board that contains a processor that is used as a digital signal processor, such as an ARM® Cortex M4, or other lightweight computing devices.

The processing unit 112 can be any suitable processor, such as a central processing unit (CPU), a graphics processing unit (GPU), an application-specific integrated circuit (ASIC), a field programmable gate array (FPGA), a digital signal processor (DSP), a multicore processor, and/or any other type of processing unit, or a combination of two or more of a same type and/or different types of processing units, such as a system on a chip (SoC), or a CPU configured to operate in conjunction with a GPU. In general, the processing unit 112 can be any technically feasible hardware unit capable of processing data and/or executing software applications.

The memory 114 can include a random-access memory (RAM) module, a flash memory unit, or any other type of memory unit or combination thereof. The processing unit 112 is configured to read data from and write data to memory 114. In various embodiments, the memory 114 includes non-volatile memory, such as optical drives, magnetic drives, flash drives, or other storage. In some embodiments, separate data stores, such as an external device included in a network ("cloud storage") supplements the memory 114. The audio processing application 120 within memory 114 can be executed by the processing unit 112 to implement the overall functionality of the computing device 110, including the audio processing application 120 and/or running simulations and solvers associated with the virtual listening environment 130 and, thus, to coordinate the operation of the computing device 110 as a whole. In various embodiments, an interconnect bus (not shown) connects the processing unit 112, the memory 114, and any other components of the computing device 110.

The audio processing application 120 determines the relative distance of the one or more loudspeakers 160 to one or more target speaker positions within the listening environment. The audio processing application 120 generates audio signals based on the determined distances for the one or more loudspeakers 160 to reproduce. The audio processing application 120 generates the audio signals by first determining the relative positions (e.g., location and/or orientation) of a set of loudspeakers and a set of target speaker locations. For each loudspeaker 160 (e.g., 160(1), 160(2), etc.) in the set of loudspeakers, the audio processing application 120 computes distances between a given loudspeaker 160 and the set of target speaker locations. The audio processing application 120 uses the respective computed distances to generate a set of modified audio signals that are adjusted at least as a function of the computed distances. The audio processing application 120 then transmits the set of modified audio signals to the respective loudspeakers 160 for reproduction.

In various embodiments, the audio processing application 120 determines the current position of each loudspeaker in the set of loudspeakers 160 within a physical listening environment. Additionally or alternatively, the audio processing application 120 tracks the movement of one or more loudspeakers in the set of loudspeakers 160. For example, the audio processing application 120 receives sensor data (e.g., tracking data for a given loudspeaker as a series of optical data, and/or a series of auditory data received in response to test signals generated by the computing device 110) from the one or more sensors 150. In such instances, the sensor data indicates the location and/or orientation of each loudspeaker 160 at a given time. In some embodiments, the sensor data indicates that at least one loudspeaker (e.g., a loudspeaker 160(4)) of the set of loudspeakers is moving. The audio processing application 120 processes the sensor data to determine the respective positions of the set of loudspeakers 160 and causes the computing device 110 to store the determined positions as portions of the position data 136 in a common coordinate system. In some embodiments, the audio processing application 120 receives sensor data generated by one or more sensors on the loudspeaker 160(4). For example, the loudspeaker 160 can include one or more sensors (not shown), such as position sensors and/or an IMU that acquires various sensor data (e.g., acceleration measurements, magnetic field measurements, angular rates, etc.). In such instances, the loudspeaker 160 acquires sensor data while moving and transmits a sequence of messages containing the acquired sensor data. In such instances, the audio processing application 120 receives and aggregates the sensor data included in messages and determines the trajectory and/or current position of the loudspeaker 160.

In various embodiments, the audio processing application 120 determines one or more target speaker positions within the physical listening environment based on a target listening area. In some embodiments, the audio processing application 120 generates a sphere with a reference point within the target listening area as the centroid and encompassing or circumscribing each of the one or more loudspeakers 160. The audio processing application 120 then selects positions on the surface of the sphere as the target speaker positions. In some embodiments, the audio processing application 120 determines a front direction relative to the reference point and identifies the target speaker positions based on the determined front direction. Additionally or alternatively, in some embodiments, the audio processing application 120 retrieves the audio channel information 170, where the audio channel information 170 specifies an idealized quantity of speakers and speaker positions arranged around a reference point to produce a specified quantity of audio channels. In such instances, the audio processing application 120 uses the idealized speaker positions specified in the audio channel information 170 to identify the target speaker positions in the physical listening environment.

In various embodiments, the audio processing application 120 computes a set of distances from the set of loudspeakers 160 to the set of target speaker positions. In some embodiments, the audio processing application 120 computes physical distances (e.g., Euclidean distances) from each loudspeaker 160 in the physical listening environment to each of the target speaker positions to generate the computed distances. Additionally or alternatively, in some embodiments, the audio processing application 120 generates a virtual listening environment 130 and places virtual microphones 134 and virtual audio emitters 132 at positions corresponding to the respective loudspeakers 160 and target speaker positions. The audio processing application 120 computes distances, such as Euclidean distances, within the virtual listening environment 130 from the virtual microphones 134 to the virtual audio emitters 132.

For example, the audio processing application 120 manages the virtual listening environment 130 and places a set of virtual microphones 134 at positions within the virtual listening environment 130 that correspond to the positions of the set of loudspeakers 160 within the physical listening environment. The audio processing application 120 also places a set of virtual audio emitters 132 at positions within the virtual listening environment 130 that correspond to the target speaker positions within the physical listening environment. The audio processing application 120 computes, for each virtual microphone 134, distances between the virtual microphone 134 and each of the virtual audio emitters 132. The computed distances within the virtual listening environment 130 represent the physical distances between the loudspeakers 160 and the target speaker positions within the physical listening environment.

In various embodiments, the audio processing application 120 generates audio signals for the loudspeakers 160 based on the set of computed distances and one or more distance attenuation functions. In various embodiments, the audio processing application 120 uses one or more distance attenuation functions (e.g., linear, inverse, inverse-squared functions, etc.) to modify the amplitude and/or phase of an audio signal 140 to generate a modified audio signal for a given loudspeaker 160 based on one or more computed distances between the loudspeaker 160 and one or more target speaker locations. Additionally or alternatively, the audio processing application 120 uses other functions to modify the audio signal 140 based on a relative orientation difference between the loudspeaker 160 and orientations of the one or idealized speakers located at the target speaker positions.

For example, the audio processing application 120 can receive an input audio signal for a specific audio channel (e.g., a left front audio channel signal in a 7.1.0 multichannel signal) for reproduction. The audio processing application 120 computes a set of distances between the target speaker position for the left front channel and each loudspeaker 160. The audio processing application 120 then generates a set of modified audio channel signals from the input audio signal. In such instances, the audio processing application 120 generates a separate modified audio signal for each respective loudspeaker 160 based on the respective computed distances. In some embodiments, the audio processing application 120 combines modified audio channel signals for a given speaker to generate a composite audio signal for reproduction by the loudspeaker 160. For example, the audio processing application 120 can combine modified audio signals corresponding to the left front, right front, center, left surround, and right surround audio channels to generate a composite audio signal. Alternatively, in some embodiments, the audio processing application 120 transmits each of the respective modified audio channel signals for the loudspeaker 160 (e.g., modified audio channel signals for each of the audio channels) to the given loudspeaker 160 for reproduction.

The audio processing application 120 drives the computing device 110 to transmit the set of modified audio signals to the set of loudspeakers 160. In some embodiments, each of the respective loudspeakers in the set of loudspeakers 160 receives one of the modified audio signals from the computing device 110 via a wire, a wireless stream, or via a network. Upon reception of the respective modified audio signals, each loudspeaker in the set loudspeakers 160 reproduces the respective modified audio signals to generate soundwaves within the physical listening environment. In various embodiments, the soundwaves that the set of loudspeakers 160 generates combine to generate a sound field that includes a sweet spot at the target listening area within the physical listening environment.

The virtual listening environment 130 is a computer model that simulates operations and physics within a virtual acoustic environment, as well as the operation of one or more virtual devices in the virtual acoustic environment. In some embodiments, an application managing the virtual listening environment 130 (e.g., the audio processing application 120, a separate application, etc.) is trained with data simulating measurement data recorded in a test listening environment.

The virtual audio emitters 132 and the one or more virtual microphone(s) 134 represent devices and/or idealized objects within the physical listening environment. For example, the one or more virtual microphones 134 represent the one or more loudspeakers 160 within the physical listening environment. In various embodiments, the audio processing application 120 uses principles of audio reciprocity to select a set of virtual audio emitters 132 to represent a set of idealized speakers that respectively reproduce a set of audio channels. In such instances, the audio processing application 120 uses the virtual audio emitters 132 and/or the virtual microphones 134 to compute distances used to generate the set of modified audio signals.

For example, the audio processing application 120 can initially determine the positions of a set of loudspeakers 160(1)-160(5) that are present within the physical listening environment. The audio processing application 120 places a set of virtual microphones 134(1)-134(5) at positions (e.g., location and orientation) within the virtual listening environment 130 that correspond to the positions of the loudspeakers 160(1)-160(5) within the physical listening environment. The audio processing application 120 can then place a set of virtual audio emitters 132(1)-132(7) within the virtual listening environment, where the audio processing application 120 determines the positions of the virtual audio emitters 132(1)-132(7) to determine corresponding target speaker positions in the physical listening environment.

In some embodiments, the audio processing application 120 places the set of virtual audio emitters 132(1)-132(7) by generating a virtual sphere within the virtual listening environment 130 that includes the target listening area as a centroid and encompasses each of the virtual microphones 134(1)-134(5). Upon generating the virtual sphere, the audio processing application 120 places the set of virtual audio emitters 132(1)-132(7) along the surface of the virtual sphere. Each of the placed virtual audio emitters 132(1)-132(7) corresponds to an idealized speaker for an audio channel configuration. In such instances, the audio processing application 120 identifies the set of target speaker positions in the physical listening environment that correspond to the positions of the set of virtual audio emitters 132(1)-132(7) in the virtual listening environment 130. When the audio processing application 120 computes distances between the virtual audio emitters 132(1)-132(7) and the virtual microphones 134(1)-134(5), the computed distances for a given virtual microphone 134 (e.g., a set of distances computed for the virtual microphone 134(1)) within the virtual listening environment 130 correspond to the computed distances between a corresponding loudspeaker 160(1) and the target speaker positions within the physical listening environment.

In various embodiments, the positions of the virtual audio emitters 132 and/or the set of virtual microphones 134 are represented in the form of a combination of the location and orientation. For example, the position data 136 for a given virtual microphone 134 includes coordinates for the location of the virtual microphone 134, as well as orientation information, such as a set of angles (e.g., $\{\mu, \varphi, \psi\}$) of the front of the virtual microphone 134 relative to a normal orientation within the virtual listening environment 130. In some embodiments, the position data 136 also includes a determined front direction for the system relative to the reference point.

The audio channel information 170 specifies an audio channel layout for the audio processing application 120 to distribute audio signals among the loudspeakers 160. In various embodiments, the audio channel information 170 specifies a quantity of each type of audio channel (e.g., general purpose type, bass type, top type, etc.), where a separate audio signal corresponding to each type is to be distributed among the loudspeakers 160. For example, the audio channel information 170 can include an audio channel indicator, where the audio channel indicator includes separate fields for each audio channel group. The audio channel indicator can be a number delineated as X.Y.Z, where "X" is the capability for the general purpose type audio channels (e.g., for speakers placed on a horizontal level), "Y" is the capability for the bass type audio channel, and "Z" is the capability for the top type audio channel (e.g., speakers located in the top portions of the listening environment and/or speakers oriented upwards within a loudspeaker 160). In such instances, the audio processing application 120 receives and processes a set of audio channel signals that correspond to each of the specified audio channels before transmitting a set of modified audio channel signals for reproduction.

In some embodiments, the audio channel information 170 specifies target speaker positions within the listening environment. For example, the audio channel information 170 specifies, for each audio channel, an idealized distance and orientation for an idealized speaker to be positioned relative to a reference point. In such instances, the audio processing application 120 uses the idealized distance and orientation specified by the audio channel information 170 to determine the target speaker positions within the listening environment.

Alternatively, in some embodiments, the audio channel information 170 does not specify idealized distances and orientations for a set of idealized speakers. In such instances, the audio processing application 120 uses the information about the audio channel (e.g., quantity of audio channels, audio channel types, etc.) to determine the positions of the target speaker positions within the listening environment. For example, audio processing application 120 identifies a reference point within a target listening area. The audio processing application 120 can then generate a sphere that encompasses or circumscribes each of the loudspeakers 160 and includes the reference point as its centroid. The audio processing application 120 also determines the quantity of each type of audio channel from the audio channel information 170. Upon generating the sphere, the audio processing application 120 places a set of virtual audio emitters 132(1)-132(7) along the surface of the sphere (e.g., positioning general purpose type speakers at equidistances along a first plane of the sphere, placing top speakers along a second plane above first plane, etc.), where each virtual audio emitter 132 corresponds to an idealized speaker to reproduce one of the audio channels.

The one or more sensor(s) 150 include various types of sensors that acquire sensor data from the physical listening environment. For example, the sensors 150 can include auditory sensors, such as microphones, to receive types of sound (e.g., subsonic pulses, ultrasonic sounds, speech commands, etc.). In some embodiments, the sensors 150 include optical sensors, such as RGB cameras, time-of-flight cameras, infrared cameras, depth cameras, a quick response (QR) code tracking system, potentiometers, proximity or presence sensors, motion sensors, such as an accelerometer or an inertial measurement unit (IMU) (e.g., a three-axis accelerometer, gyroscopic sensor, and/or magnetometer), pressure sensors, and so forth. In addition, in some embodiments, the sensors 150 can include wireless sensors, including radio frequency (RF) sensors (e.g., sonar and radar), and/or wireless communications protocols, including Bluetooth, Bluetooth low energy (BLE), cellular protocols, and/or near-field communications (NFC).

The one or more loudspeaker(s) 160 each provide a sound output by reproducing a respective received audio signal. For example, the one or more loudspeakers 160 could be components of a wired or wireless speaker system, or any other device that generates a sound output. In various embodiments, the two or more loudspeakers 160 can be incorporated into a speaker array and/or a single device (e.g., disposed in the body of a form factor including the multiple loudspeakers) and share a common location. In various embodiments, the one or more loudspeakers are implemented using any number of different conventional form factors, such as a single consumer product, discrete loudspeaker devices, personal speakers, body-worn (head, shoulder, arm, etc.) speaker devices, and so forth. In some embodiments, the one or more loudspeakers 160 can be connected to output devices that additionally provide other forms of outputs, such as display devices that provide visual outputs.

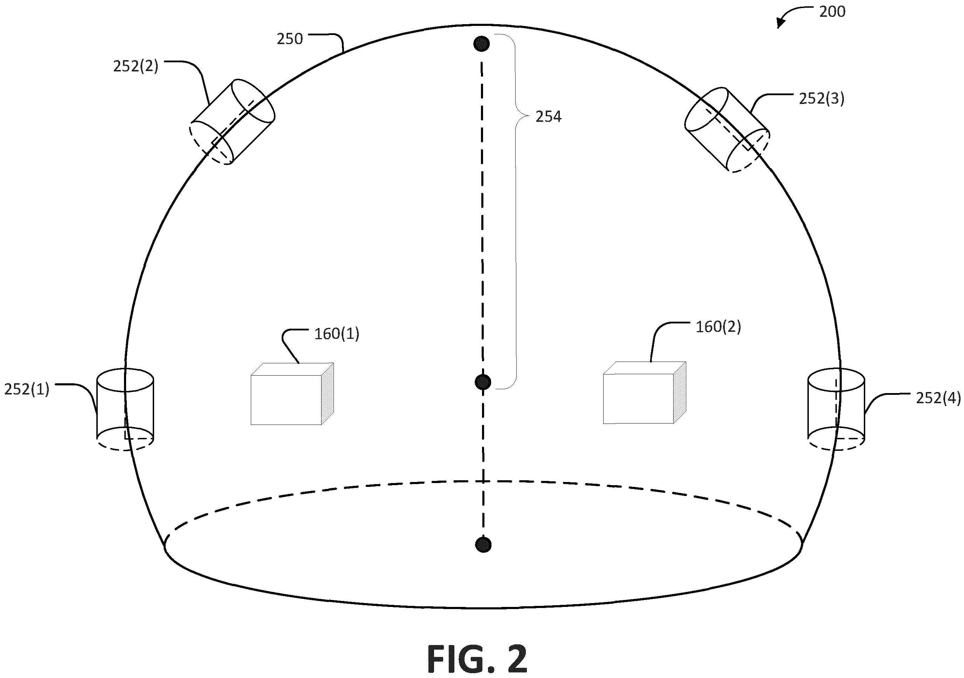

Figure 2 illustrates an example physical listening environment 200 that includes a group of physical loudspeakers 160 and a group of idealized speakers 252. As shown, the physical listening environment 200 includes, without limitation, the set of loudspeakers 160, a virtual sphere 250, and the group of idealized speakers 252 (e.g., 252(1)-252(4)). The virtual sphere 250 includes, without limitation, a radius 254.

In operation, the audio processing application 120 receives sensor data associated with the physical listening environment 200. Based on the sensor data, the audio processing application 120 determines the positions of one or more loudspeakers 160(1)-160(2) within the physical listening environment 200. The audio processing application 120 determines the target positions of one or more idealized speakers 252 within the physical listening environment 200 by generating the virtual sphere 250 to encompass each of the loudspeakers 160(1)-160(2). Upon generating the virtual sphere 250, the audio processing application 120 places one or more idealized speakers 252(1)-252(4) along the surface of the virtual sphere 250. The audio processing application determines that the positions of respective idealized speakers 252(1)-252(4) are the target speaker positions within the physical listening environment 200. In such instances, the audio processing application 120 computes separate sets of distances: a first set of computed distances for the loudspeaker 160(1), a second set of computed distances for loudspeaker 160(2), and so forth. The number of loudspeakers 160 within the physical listening environment is arbitrary; accordingly, the number of sets of computed distances that the audio processing application 120 computes is also arbitrary.

In various embodiments, the audio processing application 120 generates the virtual sphere 250 in the physical listening environment 200. Alternatively, the audio processing application 120 generates the virtual sphere 250 within a virtual listening environment 130 representing the physical listening environment 200. In such instances, the audio processing application 120 generates the virtual sphere 250 such that the virtual sphere encompasses each virtual microphone 134 included in the virtual listening environment 130.

The audio processing application 120 identifies a target listening area within the physical listening environment 200. The audio processing application 120 determines a reference point representing the target listening area. Upon identifying the reference point, the audio processing application 120 generates the virtual sphere 250 such that the virtual sphere encompasses the reference point and the locations of each loudspeakers 160(1)-160(2). For example, the audio processing application 120 can use the reference point as a centroid or a position along a diameter of the virtual sphere 250. The audio processing application 120 can then adjust the radius 254 of the virtual sphere until each of the loudspeakers 160(1)-160(2) is included in the virtual sphere.

In various embodiments, the audio processing application 120 retrieves the audio channel information 170, where the audio channel information 170 specifies a quantity of idealized speakers 252 and/or speaker positions arranged around a reference point to produce a specified quantity of audio channels. In such instances, the audio processing application 120 places the idealized speakers specified in the audio channel information 170 to identify the target speaker positions in the physical listening environment. For example, the audio processing application 120 can determine a 2.0.2 multichannel configuration, where two general purpose type idealized speakers 252(1), 252(4) are to be positioned on a horizontal level on the virtual sphere, and two top type idealized speakers 252(2), 252(3) are to be placed at top portions of the virtual sphere 250.

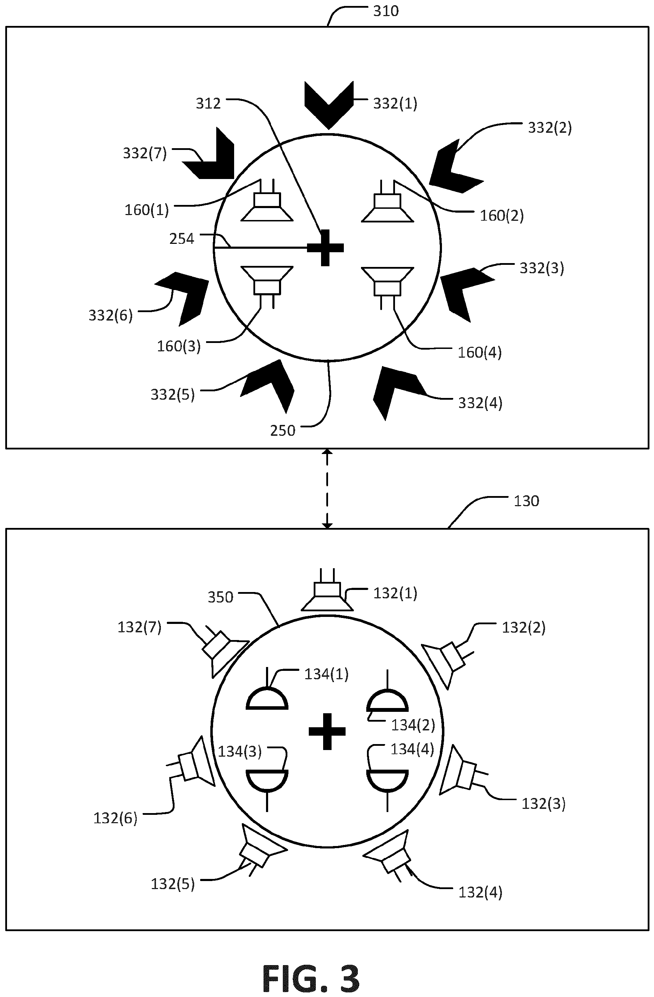

Figure 3 illustrates an example physical listening environment 310 and corresponding virtual listening environment 130 modeled by the audio processing system 100 of Figure 1, according to various embodiments. As shown, the physical listening environment 310 includes, without limitation, a set of loudspeakers 160, a virtual sphere 250, and a set of target speaker positions 332. The virtual listening environment 130 includes, without limitation, a set of virtual microphones 134, a virtual sphere 350, and a set of virtual audio emitters 132.

In operation, the audio processing application 120 determines the positions of the loudspeakers 160(1)-160(4) in the physical listening environment 310. The audio processing application 120 places a set of virtual microphones 134(1)-134(4) at corresponding positions within the virtual listening environment 130. The audio processing application 120 generates a virtual sphere 350 within the virtual listening environment 130 that encompasses the set of virtual microphones 134(1)-134(4). The audio processing application 120 places a set of virtual audio emitters 132(1)-132(7) along the virtual sphere 350. The audio processing application 120 identifies a set of target speaker positions 332(1)-332(5) as locations along a virtual sphere 250 within the physical listening environment 310.

The physical listening environment 310 is a portion of a real-world environment that includes one or more loudspeakers 160(1)-160(4) that reproduce audio signals that a listener hears. In various embodiments, the physical listening environment 310 can include various quantities of loudspeakers 160. In such instances, the audio processing application 120 tracks each of the loudspeakers 160 within the physical listening environment 310 and distributes audio signals to each of the loudspeakers 160.

In various embodiments, the audio processing application 120 tracks the movement of one or more of the loudspeakers 160(1)-160(5) within the physical listening environment 310. In such instances, the audio processing application 120 receives from the one or more sensors 150 the sensor data indicating the location and/or orientation of each loudspeaker 160(1)-160(5) at a given time. In some embodiments, the sensor data indicates that at least one loudspeaker (e.g., the loudspeaker 160(2)) is moving. In one example, the audio processing application 120 acquires sensor data in the form of tracking data that includes a series of optical data acquired by optical sensors, and/or a series of auditory data received by one or more microphones in response to test signals generated by the computing device 110. The audio processing application 120 processes the tracking data to determine the current position of each loudspeaker 160(1)-160(4), where the position includes a location and orientation. For example, the position the loudspeaker 160(2) includes coordinates for the location of the loudspeaker 160(2) within the physical listening environment 310, as well as orientation information, such as a set of angles (e.g., $\{\mu, \varphi, \psi\}$) of the front of the loudspeaker 160(2) relative to a normal orientation within the physical listening environment 310. Additionally or alternatively, in some embodiments, the audio processing application 120 receives sensor data generated by position sensors and/or an IMU (e.g., acceleration measurements, magnetic field measurements, angular rates, etc.) on the loudspeaker 160(2). For example, the loudspeaker 160(2) while moving transmits a sequence of messages containing the sensor data. In such instances, the audio processing application 120 receives and aggregates the sensor data included in messages and determines the trajectory and/or current position of the loudspeaker 160(2).

In various embodiments, the audio processing application 120 tracks the positions of the loudspeakers 160(1)-160(4) using the virtual listening environment 130. In some embodiments, the audio processing application 120 generates the virtual listening environment 130 as a virtual simulation of the physical listening environment 310. Alternatively, in some embodiments, a separate application (not shown), such as an augmented reality (AR), virtual reality (VR), and/or extended reality (XR) application generates the virtual listening environment 130. In such instances, the audio processing application 120 uses the virtual listening environment 130 to compute distances within the virtual listening environment 130 and use the computed distances when generating the audio signals for the loudspeakers 160(1)-160(4). Alternatively, upon determining the target speaker positions 332(1)-332(7) within the physical listening environment, the audio processing application 120 computes the distances between the loudspeakers 160(1)-160(4) and the target speaker positions 332(1)-332(7).

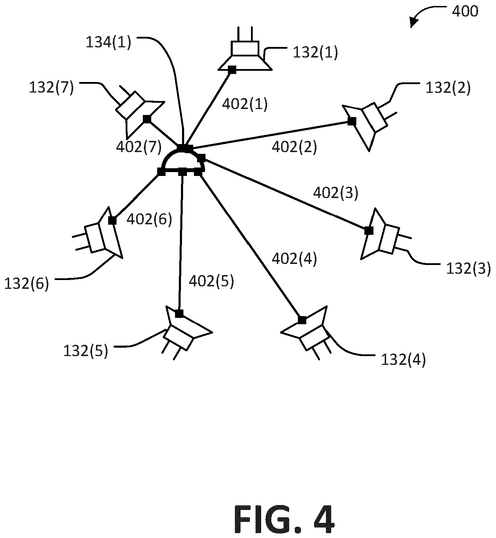

Figure 4 illustrates an example virtual listening environment 400 including a set of distances 402(1)-402(7) between a virtual microphone 134(1) and a set of virtual audio emitters 132(1)-132(7) computed by the audio processing system 100 of Figure 1. As shown, the virtual listening environment 400 includes, without limitation, a virtual microphone 134(1) and a set of virtual audio emitters 132(1)-132(7).

In operation, the audio processing application 120 generates audio signals for the loudspeaker 160(1) based on the computed distances 402(1)-402(7) between the virtual microphone 134(1), at the position corresponding to the position of the loudspeaker 160(1), and the one or more virtual audio emitters 132(1)-132(7). In various embodiments, the audio processing application 120 applies one or more distance attenuation functions and the computed distances 402(1)-402(7) to modify the amplitude and/or phase of an input audio signal to generate one or more modified audio signals (e.g., 140(1)-140(7)). Additionally or alternatively, the audio processing application 120 uses other functions to modify the input audio signal based on the orientation of the loudspeaker 160(1) relative to the front of the audio processing system 100 and/or a reference point.

In various embodiments, the audio processing application 120 selects a distance attenuation function from a set of candidate distance attenuation functions. For example, the computing device 110 can store a set of candidate distance attenuation functions, such as a linear function, a linear-squared function, or an inverse function, that attenuates the gain or changes the phase of the input audio signal as a function of the distance between the virtual microphone 134(1) and the set of virtual audio emitters 132(1)-132(7). In such instances, the audio processing application 120 uses the selected distance attenuation function to modify the amplitude and/or phase of an input audio signal for the corresponding loudspeaker 160(1) based on the computed distances 402(1)-402(7). In some embodiments, the distance attenuation function attenuates the audio signal between a minimum distance ($D_{min}$) and a maximum distance ($D_{max}$). In such instances, the audio processing application 120 compares a computed distance 402 to a minimum distance threshold ($D_{min}$) based on the minimum distance (e.g., zero or some other minimum distance) and/or a maximum distance threshold based on the maximum distance ($D_{max}$). When the audio processing application 120 determines that the computed distance 402 satisfies the minimum threshold and/or the maximum threshold, the audio processing application 120 applies the selected distance attenuation function.

In one example, the audio processing application 120 uses a linear function that attenuates the amplitude of a given signal as a function of the distance (D) between the loudspeaker 160 and the target speaker position 332 (or the virtual microphone 134 and the virtual audio emitter 132). The linear function can also modify the amplitude outside the minimum and maximum thresholds. For example, equation 1 computes the amplitude based on the value of the computed distance 402 compared to the minimum and maximum thresholds:

$$A(D) = \begin{cases} 0 & D \geq D_{max} \\ 1 - \frac{D - D_{min}}{D_{max} - D_{min}} & D_{min} \leq D < D_{max} \\ 1 & D < D_{min} \end{cases}$$

Equation 1

In another example, the audio processing application 120 uses a linear-squared function that attenuates the amplitude of a given signal as a function of a square of the distance (D), where the amplitude attenuates as the distance increases. The linear-squared function can also modify the amplitude outside the minimum and maximum thresholds. For example, the piecemeal equation 2 computes the amplitude based on the value of the computed distance 402 compared to the minimum and maximum thresholds:

$$A(D) = \begin{cases} 0 & D \geq D_{max} \\ \frac{(D - D_{max})^2}{(D_{min} - D_{max})^2} & D_{min} \leq D < D_{max} \\ 1 & D < D_{min} \end{cases}$$

Equation 2

In further examples, the audio processing application 120 uses an inverse function that the amplitude of a given signal is a function an inverse of the distance (D), attenuating as the distance increases. The inverse function can also modify the amplitude outside the minimum and maximum thresholds. For example, the piecemeal equation 3 computes the amplitude based on the value of the computed distance 402 compared to the minimum and maximum thresholds:

$$A(D) = \begin{cases} D_{min}/D_{max} & D \geq D_{max} \\ D_{min}/D & D_{min} \leq D < D_{max} \\ 1 & D < D_{min} \end{cases}$$

Equation 3

Some embodiments, the audio processing application 120 uses, in addition to the inverse function, a taper that gradually attenuates the amplitude of a given signal as the distance exceeds the maximum threshold to a taper point (T). For example, the piecemeal equation 4 computes the amplitude based on the value of the computed distance 402 compared to the minimum and maximum thresholds, as well as a taper point (e.g., 4*(Dmax - Dmin)):

$$A(D) = \begin{cases} 0 & D \geq D_{max} + T \\ \frac{D_{min}}{D_{max}} * (D - D_{max} - T)^2/T^2 & D_{max} \leq D < D_{max} + T \\ D_{min}/D & D_{min} \leq D < D_{max} \\ 1 & D < D_{min} \end{cases}$$

Equation 4

Additionally or alternatively, in some embodiments, the audio processing application 120 uses distance attenuation functions that further modify the amplitude and/or phase based on a computed difference in orientation. In such instances, the computed amplitude is a function of the distance (D) and one or more angles representing the difference in orientation, as shown in Equation 5:

$$A = f(D, \mu, \varphi, \psi)$$

Equation 5

In some embodiments, the audio processing application 120 generates a separate modified audio signal for each audio channel based on the respective computed distances 402(1)-402(7). In such instances, the audio processing application 120 combines modified audio channel signals for the loudspeaker 160(1) to generate a composite audio signal for reproduction by the loudspeaker 160(1). For example, the audio processing application 120 can combine modified audio signals corresponding to the left front, right front, center, left surround, right surround, left top, and right top audio channels to generate a composite audio signal for the loudspeaker 160(1). Alternatively, in some embodiments, the audio processing application 120 maintains the separate modified audio channel signals for the loudspeaker 160(1) (e.g., modified audio channel signals for each of the audio channels corresponding to each target speaker position 332(1)-332(7)), where the loudspeaker 160(1) reproduces each of the separate modified audio signals.

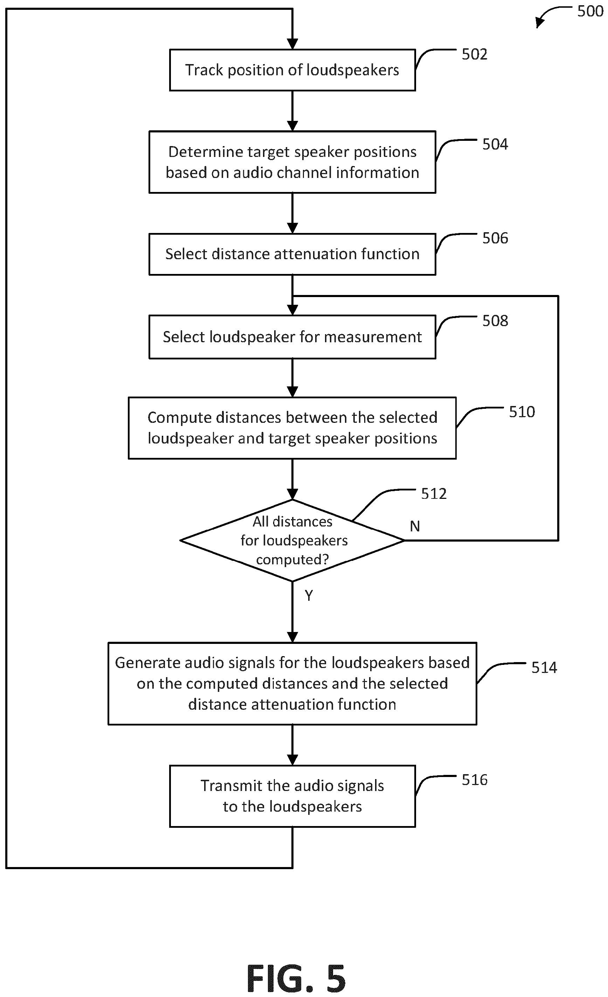

Figure 5 sets forth a flow chart of method steps for generating audio signals based on the positions of the loudspeakers, according to various embodiments. Although the method steps are described with reference to the systems of Figures 1-4, persons skilled in the art will understand that any system configured to implement the method steps, in any order, falls within the scope of the present disclosure.

As shown, the method 500 begins at step 502, where the audio processing application 120 tracks the positions of a set of loudspeakers 160. In various embodiments, the audio processing application 120 executing on the computing device 110 tracks the positions and/or movements of a set of loudspeakers 160 (e.g., the loudspeakers 160(1)-160(4)) within a physical listening environment 310. Additionally or alternatively, in various embodiments, the audio processing application 120 determines the current position of each loudspeaker in the set of loudspeakers 160. In various embodiments, the audio processing application 120 receives sensor data from one or more sensors 150 coupled to the computing device 110, where the sensor data indicates the location and/or orientation of each loudspeaker 160 at a given time. In some embodiments, the sensor data indicates that at least one loudspeaker (e.g., the loudspeaker 160(4)) of the set of loudspeakers 160 is moving.

In one example, the audio processing application 120 acquires sensor data from the one or more sensors 150 coupled to the computing device 110 (e.g., tracking data for a given loudspeaker 160 as a series of optical data, and/or a series of auditory data received in response to test signals generated by the computing device 110). In some embodiments, the audio processing application 120 determines the current position of each loudspeaker of the set of loudspeakers 160 from the sensor data. The computing device 110 then stores each determined position as a portion of the position data 136, in the form of a combination of the location and orientation. For example, the position data 136 for a given loudspeaker 160(4) includes coordinates for the location of the loudspeaker 160(4) within the physical listening environment 310, as well as orientation information, such as a set of angles (e.g., $\{\mu, \varphi, \psi\}$) of the front of the loudspeaker 160(4) relative to a normal orientation within the physical listening environment 310.

Additionally or alternatively, in some embodiments, the audio processing application 120 receives sensor data generated by position sensors and/or an IMU (e.g., acceleration measurements, magnetic field measurements, angular rates, etc.) on the loudspeaker 160(4). For example, the loudspeaker 160(4) while moving transmits a sequence of messages containing the sensor data. In such instances, the audio processing application 120 receives and aggregates the sensor data included in messages and determines the trajectory and/or current position of the loudspeaker 160.

At step 504, the audio processing application 120 determines one or more target speaker positions 332 based on audio channel information 170. In various embodiments, the audio processing application 120 processes the audio channel information 170 that specifies a quantity of each type of audio channel (e.g., general purpose type, bass type, top type, etc.) that are to be distributed to the loudspeakers 160. In some embodiments, the audio channel information 170 specifies one or more target speaker positions 332 within the physical listening environment 310. For example, the audio channel information 170 specifies, for each audio channel, an idealized distance and orientation for an idealized speaker to be positioned relative to a reference point 312. In such instances, the audio processing application 120 uses the idealized distance and orientation specified by the audio channel information 170 to determine the target speaker positions 332 within the listening environment.

Alternatively, in some embodiments, the audio channel information 170 does not specify idealized distances and orientations for a set of idealized speakers. In such instances, the audio processing application 120 uses the information about the audio channel (e.g., quantity of audio channels, audio channel types, etc.) to determine the positions of the target speaker positions 332 within the physical listening environment 310. For example, the audio processing application 120 identifies a reference point 312 within a target listening area. The audio processing application 120 then generates within a virtual listening environment 130 a virtual sphere 250 that encompasses each of the loudspeakers 160 and includes the reference point 312 as the centroid. Upon generating the virtual sphere 250, the audio processing application 120 places a set of virtual audio emitters 132(1)-132(7) along the surface of the virtual sphere 250. where each virtual audio emitter 132 corresponds to an idealized speaker to reproduce one of the audio channels. The audio processing application 120 identifies the positions of the virtual audio emitters 132(1)-132(7) in the virtual listening environment 130 as the target speaker positions 332(1)-332(7) within the physical listening environment 310.

At step 506, the audio processing application 120 selects a distance attenuation function. In various embodiments, the audio processing application 120 selects a distance attenuation function from a set of candidate distance attenuation functions to use when generating a set of modified audio signals. In various embodiments, the audio processing application 120 applies the distance attenuation function and a computed distance to an input audio signal. The distance attenuation function modifies the amplitude and/or phase of an input audio signal as a function of the computed distance, generating a modified audio signal for a given loudspeaker 160 to reproduce. For example, the computing device 110 can store a set of candidate distance attenuation functions, such as a linear function (e.g., equation 1), a linear-squared function (e.g., equation 2), an inverse function (e.g., equations 3 and 4), that attenuates the gain or changes the phase (e.g., equation 5), of the input audio signal as a function of the distance between the position of a given loudspeaker and a second position. Once the audio processing application 120 computes the applicable distances, the audio processing application 120 then uses the selected distance attenuation function to generate the modified audio signals.

At step 508, the audio processing application 120 selects a loudspeaker for measurement. In various embodiments, the audio processing application 120 iteratively computes distances between the loudspeakers 160 and the target speaker positions 332. In such instances, the audio processing application 120 iteratively selects a loudspeaker (e.g., 160(1)) from the set of loudspeakers 160 and computes distances between the selected loudspeaker 160(1) and each target speaker positions 332, generating a set of computed distances for each loudspeaker in the set of loudspeakers 160.

At step 510, the audio processing application 120 computes distances between the selected loudspeaker 160(1) and the target speaker positions 332. In some embodiments, the audio processing application 120 computes Euclidean distances and/or differences in orientation in the physical listening environment 310 between the position of the selected loudspeaker 160(1) and each of the target speaker positions 332. Alternatively, in some embodiments, the audio processing application 120 computes the distances 402 and/or orientation differences for the selected loudspeaker 160(1) using the virtual listening environment 130. In such instances, the audio processing application 120 places a virtual microphone 134(1) at a position in the virtual listening environment 130 corresponding to the position of the selected loudspeaker 160(1) in the physical listening environment 310. The audio processing application 120 computes distances 402(1)-402(7) and/or orientation differences between the position of the virtual microphone 134(1) and the respective positions of a set of virtual audio emitters 132(1)-132(7) within the virtual listening environment 130. Consequently, the computed distances 402(1)-402(7) between the virtual microphone 134(1) and the virtual audio emitters 132(1)-132(7) represents the Euclidean distances between the loudspeaker 160(1) and the target speaker positions 332(1)-332(7) within the physical listening environment 310. Additionally or alternatively, differences in one or more angles between the positions of between the virtual microphone 134(1) and the positions the virtual audio emitters 132(1)-132(7) correspond to the same differences in orientation between the position of the selected loudspeaker 160(1) and the respective target speaker positions 332(1)-332(7).

At step 512, the audio processing application 120 determines whether each loudspeaker in the set of loudspeakers 160 has been measured. When the audio processing application 120 determines that at least one loudspeaker has not been measured, the audio processing application 120 returns to step 508 to repeat steps 508-512. Otherwise, the audio processing application 120 determines that each loudspeaker in the set of loudspeakers 160 has been measured and proceeds to step 514.

At step 514, the audio processing application 120 generates audio signals for the set of loudspeakers 160 based on the respective computed distances 402 and the selected distance attenuation function. In various embodiments, the audio processing application 120 uses the selected distance attenuation function to modify the amplitude and/or phase of an input audio signal for each loudspeaker 160(1)-160(4). For a given loudspeaker 160(1), the audio processing application 120 generates one or more modified audio signals based on the respective computed distances 402(1)-402(7) between the loudspeakers 160(1) and the respective target speaker positions 332(1)-332(7). For example, upon retrieving an input audio signal for an audio channel (e.g., a left front audio channel signal), the audio processing application 120 generates a modified audio signal for the loudspeaker 160(1) by modifying the input audio signal using the selected distance attenuation function to modify the amplitude of the input audio signal. The distance attenuation function modifies the amplitude of the input audio signal as a function of the computed distance 402(1) such that the amplitude of the modified audio signal decreases as the computed distance 402(1) between the loudspeaker 160(1) and the target speaker position 332(1) increases.

In some embodiments, the distance attenuation function attenuates the audio signal between a minimum distance and a maximum distance. In such instances, the audio processing application 120 compares the computed distance 402(1) to a minimum distance threshold and/or a maximum distance threshold. When the audio processing application 120 determines that the computed distance 402(1) satisfies the threshold(s), the audio processing application 120 applies the selected distance attenuation function.

In some embodiments, the audio processing application 120 generates a separate modified audio signal for each audio channel based on the respective computed distances 402(1)-402(7). In such instances, the audio processing application 120 combines modified audio channel signals for the loudspeaker 160(1) to generate a composite audio signal for reproduction by the loudspeaker 160(1). For example, the audio processing application 120 can combine modified audio signals corresponding to the left front, right front, center, left surround, right surround, left top, and right top audio channels to generate a composite audio signal for the loudspeaker 160(1). Alternatively, in some embodiments, the audio processing application 120 maintains the separate modified audio channel signals for the loudspeaker 160(1) (e.g.,

modified audio channel signals for each of the audio channels corresponding to each target speaker position 332(1)-332(7)), where the loudspeaker 160(1) reproduces each of the separate modified audio signals.

At step 516, the audio processing application 120 transmits the modified audio signals to the loudspeakers 160. In various embodiments, the audio processing application 120 drives the computing device 110 to transmit the set of modified audio signals to the set of loudspeakers 160. In some embodiments, each of the respective loudspeakers in the set of loudspeakers 160 receives one of the modified audio signals from the computing device 110 via a wire, a wireless stream, or via a network. Upon reception of the modified audio signal, each of the set of loudspeakers 160 reproduces the modified audio signal to generate soundwaves within the physical listening environment 310. In various embodiments, the soundwaves that the set of loudspeakers 160 generates combine to generate a sound field within the physical listening environment 310.

Upon transmitting the audio signals to the set of loudspeakers 160, the audio processing application 120 returns to step 502 to optionally track any additional movement by the one or more loudspeakers in the set of loudspeakers 160. For example, the audio processing application 120 returns to step 502 to detect movement of the loudspeaker 160(2) to a new location within the physical listening environment 310. In such instances, the audio processing application 120 repeats at least a portion of the method 500 to compute the distances 402 between the loudspeaker 160(2) at the new position with the one or more target speaker positions 332.

In sum, an audio processing application tracks the location of one or more speakers within a physical listening environment. The audio processing application identifies the locations of the loudspeakers in a corresponding virtual listening environment and places virtual microphones at the identified locations. The audio processing application retrieves and uses the audio channel information to identify the locations of the one or more target speaker locations in the corresponding virtual listening environment and places virtual audio emitters at the identified locations. The audio processing application determines, for each loudspeaker, a distance between the location of the virtual audio emitter and the location of the virtual microphone corresponding to the loudspeaker within the virtual listening environment.

Upon determining the distances, the audio processing application then generates audio signals for each loudspeaker based on the respective distances. In some embodiments, the audio processing application receives multiple audio signals for a given loudspeaker and transmits each of the multiple audio speakers to the loudspeaker. In some embodiments, the audio processing application mixes the multiple audio signals into a combined audio signal and transmits the combined audio signal to the loudspeaker. When generating the audio signals, the audio processing application determines the amplitude of a given audio signal for the loudspeaker based on the determined distance between the virtual audio emitter and the virtual microphone, as well as a distance attenuation function. The audio processing application then distributes the audio signals to the respective loudspeakers for reproduction in the physical listening environment.

At least one technical advantage of the disclosed techniques relative to the prior art is that, with the disclosed techniques, sound systems can distribute audio channels to one or more loudspeakers in a physical listening area in a manner that uses the actual location of the loudspeakers to accurately reproduce the audio channel. In particular, by determining the position of one or more loudspeakers within the listening environment and attenuating audio channels based on distances between the position of an ideal loudspeaker and the positions of the one or more loudspeakers, the sound system provides a multichannel audio to a listening area. Further, mapping the audio channels to the respective loudspeakers enables a sound system to effectively incorporate varying quantities of loudspeakers in varying locations without requiring large and expensive processing resources to perform complex reconfiguration of the multichannel audio system. These technical advantages provide one or more technological improvements over prior art approaches.

1. In various embodiments, a computer-implemented method comprises determining a loudspeaker position of a loudspeaker in a listening environment, determining a target speaker position within the listening environment, retrieving an audio signal, computing a distance between the loudspeaker position and the target speaker position, generating a modified audio signal, where an amplitude of the modified audio signal is based on (i) the audio signal, (ii) the distance, and (iii) a distance attenuation function, and transmitting the modified audio signal to the loudspeaker.

2. The computer-implemented method of clause 1, further comprising determining a plurality of audio channels for reproduction, determining, based on the plurality of audio channels, a plurality of target speaker positions, the plurality of target speaker positions including the target speaker position, and computing, for each target speaker position included in the plurality of target speaker positions, a distance between the loudspeaker position and the target speaker position.

3. The computer-implemented method of clause 1 or 2, where retrieving the audio signal comprises retrieving a set of audio channel signals corresponding to the plurality of audio channels, and generating the modified audio signal comprises generating, for each audio channel signal, a modified audio channel signal, where an amplitude of the modified audio channel signal is based on (i) the audio channel, (ii) the distance, and (iii) the distance attenuation function, and combining each modified audio channel signal to generate the modified audio signal.

4. The computer-implemented method of any of clauses 1-3, where retrieving the audio signal comprises retrieving a set of audio channel signals corresponding to the plurality of audio channels, generating the modified audio signal comprises generating, for each audio channel signal, a modified audio channel signal, where an amplitude of the modified audio channel signal is based on (i) the audio channel signal, (ii) the distance, and (iii) the distance attenuation function, and transmitting the modified audio signal comprises transmitting each audio modified audio channel signal.

5. The computer-implemented method of any of clauses 1-4, further comprising retrieving audio channel information associated with the audio signal, where the audio channel information indicates the target speaker position.

6. The computer-implemented method of any of clauses 1-5, where determining the target speaker position comprises identifying a reference point in the listening environment, determining a front direction relative to the reference point, and selecting, based on the front direction, the target speaker position.

7. The computer-implemented method of any of clauses 1-6, where determining the target speaker position comprises determining a sphere that circumscribes at least the loudspeaker and one or more additional loudspeakers, and selecting a position on a surface of the sphere as the target speaker position.

8. The computer-implemented method of any of clauses 1-7, where the target speaker position is based on a first position of a listener, and further comprising tracking the listener from the first position to a second position, and updating the target speaker position based on the second position.

9. The computer-implemented method of any of clauses 1-8, where determining the loudspeaker position for the loudspeaker comprises tracking the loudspeaker.

10. The computer-implemented method of any of clauses 1-9, where the loudspeaker position includes a location and an orientation, and the amplitude of the modified audio signal is further based on the orientation of the loudspeaker relative to the target speaker position.

11. The computer-implemented method of any of clauses 1-10, where the distance attenuation function comprises at least one of: a linear function, a linear-squared function, or an inverse function.

12. The computer-implemented method of any of clauses 1-11, further comprising determining, for each additional loudspeaker of one or more additional loudspeakers in the listening environment, an additional loudspeaker position, and for each additional loudspeaker of the one or more additional loudspeakers computing an additional distance between the additional loudspeaker position and the target speaker position, generating an additional modified audio signal, where an amplitude of the additional modified audio signal is based on (i) the audio signal, (ii) the additional distance, and (iii) the distance attenuation function, and transmitting the additional modified audio signal to the additional loudspeaker.

13. In various embodiments, one or more non-transitory computer-readable media store instructions that, when executed by one or more processors, cause the one or more processors to perform the steps of determining a loudspeaker position of a loudspeaker of one or more loudspeakers in a listening environment, determining a target speaker position within the listening environment, retrieving an audio signal, computing a distance between the loudspeaker position and the target speaker position, generating a modified audio signal, where an amplitude of the modified audio signal is based on (i) the audio signal, (ii) the distance, and (iii) a distance attenuation function, and transmitting the modified audio signal to the loudspeaker.

14. The one or more non-transitory computer-readable media of clause 13, further comprising generating, in a virtual listening environment corresponding to the listening environment, one or more virtual microphones, where each virtual microphone corresponds to a loudspeaker of the one or more loudspeakers, and each virtual microphone is at a microphone position within the virtual environment corresponding to the loudspeaker position within the listening environment.

15. The one or more non-transitory computer-readable media of clause 13 or 14, the steps further comprising generating, within the virtual listening environment, a virtual audio emitter, where the virtual audio emitter is at a position within the virtual environment corresponding to the target speaker position within the listening environment, and computing the distance comprises computing a distance between a virtual microphone of the one or more virtual microphones and the virtual audio emitter.

16. The one or more non-transitory computer-readable media of any of clauses 13-15, the steps further comprising determining a plurality of audio channels for reproduction, determining, based on the plurality of audio channels, a plurality of target speaker positions, the plurality of target speaker positions including the target speaker position, and computing, for each target speaker position included in the plurality of target speaker positions, a distance between the loudspeaker position and the target speaker position.

17. The one or more non-transitory computer-readable media of any of clauses 13-16, where the distance attenuation function comprises at least one of: a linear function, a linear-squared function, or an inverse function.

18. The one or more non-transitory computer-readable media of any of clauses 13-17, where determining the target position comprises at least one of retrieving audio channel information associated with the audio signal, where the audio channel information indicates the target speaker position, determining a sphere that circumscribes at least the loudspeaker and one or more additional loudspeakers, where a position on a surface of the sphere is selected as the target speaker position, or determining a front direction relative to a reference point in the listening environment, where the target speaker position is selected based on the front direction.

19. In various embodiments, a system that generates audio signals for reproduction, comprising a memory storing one or more instructions, and a processor coupled to the memory that executes the one or more instructions by performing the steps of determining a loudspeaker position of a loudspeaker in a listening environment, determining a target speaker position within the listening environment, retrieving an audio signal, computing a distance between the loudspeaker position and the target speaker position, generating a modified audio signal, where an amplitude of the modified audio signal is based on (i) the audio signal, (ii) the distance, and (iii) a distance attenuation function, and transmitting the modified audio signal to the loudspeaker.

20. The system of claim 19, where the processor further performs the steps of determining a plurality of audio channels for reproduction, determining, based on the plurality of audio channels, a plurality of target speaker positions, the plurality of target speaker positions including the target speaker position, and computing, for each target speaker position included in the plurality of target speaker positions, a distance between the loudspeaker position and the target speaker position.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

**Claims**

1. A computer-implemented method, comprising:

   determining a loudspeaker position of a loudspeaker in a listening environment;
   determining a target speaker position within the listening environment;
   retrieving an audio signal;
   computing a distance between the loudspeaker position and the target speaker position;
   generating a modified audio signal, wherein an amplitude of the modified audio signal is based on (i) the audio signal, (ii) the distance, and (iii) a distance attenuation function; and
   transmitting the modified audio signal to the loudspeaker.

2. The computer-implemented method of claim 1, further comprising:

   determining a plurality of audio channels for reproduction;
   determining, based on the plurality of audio channels, a plurality of target speaker positions, the plurality of target speaker positions including the target speaker position; and
   computing, for each target speaker position included in the plurality of target speaker positions, a distance between the loudspeaker position and the target speaker position.

3. The computer-implemented method of claim 2, wherein:

   retrieving the audio signal comprises retrieving a set of audio channel signals corresponding to the plurality of audio channels; and
   generating the modified audio signal comprises:

      generating, for each audio channel signal, a modified audio channel signal, wherein an amplitude of the modified audio channel signal is based on (i) the audio channel, (ii) the distance, and (iii) the distance attenuation function, and
      combining each modified audio channel signal to generate the modified audio signal.

4. The computer-implemented method of claim 2, wherein:

   retrieving the audio signal comprises retrieving a set of audio channel signals corresponding to the plurality of audio channels;

generating the modified audio signal comprises generating, for each audio channel signal, a modified audio channel signal, wherein an amplitude of the modified audio channel signal is based on (i) the audio channel signal, (ii) the distance, and (iii) the distance attenuation function; and
transmitting the modified audio signal comprises transmitting each audio modified audio channel signal.

5. The computer-implemented method of claim 1, further comprising:

retrieving audio channel information associated with the audio signal,
wherein the audio channel information indicates the target speaker position.

6. The computer-implemented method of claim 1, wherein determining the target speaker position comprises:

identifying a reference point in the listening environment;
determining a front direction relative to the reference point; and
selecting, based on the front direction, the target speaker position.

7. The computer-implemented method of claim 1, wherein determining the target speaker position comprises:

determining a sphere that circumscribes at least the loudspeaker and one or more additional loudspeakers; and
selecting a position on a surface of the sphere as the target speaker position.

8. The computer-implemented method of claim 1, wherein the target speaker position is based on a first position of a listener, and further comprising:

tracking the listener from the first position to a second position; and
updating the target speaker position based on the second position.

9. The computer-implemented method of claim 1, wherein:

the loudspeaker position includes a location and an orientation; and
the amplitude of the modified audio signal is further based on the orientation of the loudspeaker relative to the target speaker position.

10. The computer-implemented method of claim 1, wherein the distance attenuation function comprises at least one of: a linear function, a linear-squared function, or an inverse function.

11. The computer-implemented method of claim 1, further comprising:

determining, for each additional loudspeaker of one or more additional loudspeakers in the listening environment, an additional loudspeaker position; and
for each additional loudspeaker of the one or more additional loudspeakers:

computing an additional distance between the additional loudspeaker position and the target speaker position,
generating an additional modified audio signal, wherein an amplitude of the additional modified audio signal is based on (i) the audio signal, (ii) the additional distance, and (iii) the distance attenuation function; and
transmitting the additional modified audio signal to the additional loudspeaker.

12. The computer-implemented method of claim 1, further comprising:

generating, in a virtual listening environment corresponding to the listening environment, one or more virtual microphones, wherein:

each virtual microphone corresponds to a loudspeaker of the one or more loudspeakers, and
each virtual microphone is at a microphone position within the virtual environment corresponding to the loudspeaker position within the listening environment.

13. The computer-implemented method of claim 12, further comprising generating, within the virtual listening environment, a virtual audio emitter, wherein:

the virtual audio emitter is at a position within the virtual environment corresponding to the target speaker position within the listening environment, and
computing the distance comprises computing a distance between a virtual microphone of the one or more virtual microphones and the virtual audio emitter.

14. One or more non-transitory computer-readable media storing instructions that, when executed by one or more processors, cause the one or more processors to perform the steps of the computer-implemented method of any of claims 1 to 13.

15. A system that generates audio signals for reproduction, comprising:

a memory storing one or more instructions; and
a processor coupled to the memory that executes the one or more instructions by performing the steps of the method of any of claims 1 to 13.

100

Sensor(s) 150

Loudspeaker(s) 160

Processing Unit 112

Memory 114

Virtual Listening Environment 130

Virtual Audio Emitter(s) 132

Virtual Microphone(s) 134

Position Data 136

Audio Signal(s) 140

Audio Processing Application 120

Audio Channel Information 170

Computing Device 110

# FIG. 1

**FIG. 2**

EP 4 589 994 A1

**FIG. 3**

**FIG. 4**

Track position of loudspeakers — 502

Determine target speaker positions based on audio channel information — 504

Select distance attenuation function — 506

Select loudspeaker for measurement — 508

Compute distances between the selected loudspeaker and target speaker positions — 510

All distances for loudspeakers computed? — 512
N
Y

Generate audio signals for the loudspeakers based on the computed distances and the selected distance attenuation function — 514

Transmit the audio signals to the loudspeakers — 516

**FIG. 5**

Europäisches
Patentamt

European
Patent Office

Office européen
des brevets

# EUROPEAN SEARCH REPORT

**Application Number**

EP 25 15 0694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 024 253 A1 (HARMAN BECKER AUTOMOTIVE SYS [DE]) 25 May 2016 (2016-05-25) | 1-8, 10-15 | INV.<br>H04S7/00 |
| Y | * paragraphs [0057] - [0087]; figures 1,3,4,7 * | 9 | ADD.<br>H04S3/02 |
| | ----- | | |
| X | EP 1 825 713 B1 (BANG & OLUFSEN AS [DK]) 17 October 2012 (2012-10-17) * paragraphs [0054] - [0055]; figures 7,8 * | 1-5,14, 15 | |
| | ----- | | |
| Y | WO 2007/135581 A2 (KONINKL PHILIPS ELECTRONICS NV [NL]; MACOURS CHRISTOPHE M [NL]) 29 November 2007 (2007-11-29) * page 3, line 31 - page 4, line 13 * | 9 | |
| | ----- | | |
| Y | US 2022/159401 A1 (BHARITKAR SUNIL [US] ET AL) 19 May 2022 (2022-05-19) * paragraphs [0032] - [0033]; figure 5 * | 9 | |
| | ----- | | |

**TECHNICAL FIELDS SEARCHED (IPC)**

H04S

The present search report has been drawn up for all claims

| Place of search | Date of completion of the search | Examiner |
|---|---|---|
| Munich | 4 June 2025 | Fruhmann, Markus |

EPO FORM 1503 03.82 (P04C01)

## ANNEX TO THE EUROPEAN SEARCH REPORT
## ON EUROPEAN PATENT APPLICATION NO.

EP 25 15 0694

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | | Publication date | Patent family member(s) | | Publication date |
|---|---|---|---|---|---|
| EP 3024253 | A1 | 25-05-2016 | CN | 105635906 A | 01-06-2016 |
| | | | EP | 3024253 A1 | 25-05-2016 |
| | | | US | 2016150346 A1 | 26-05-2016 |
| EP 1825713 | B1 | 17-10-2012 | EP | 1825713 A1 | 29-08-2007 |
| | | | US | 2009150163 A1 | 11-06-2009 |
| | | | WO | 2006054270 A1 | 26-05-2006 |
| WO 2007135581 | A2 | 29-11-2007 | NONE | | |
| US 2022159401 | A1 | 19-05-2022 | US | 2022159401 A1 | 19-05-2022 |
| | | | WO | 2020256745 A1 | 24-12-2020 |

EPO FORM P0459

For more details about this annex : see Official Journal of the European Patent Office, No. 12/82